# EUROPEAN PATENT APPLICATION

(11) **EP 1 078 789 A2**
(43) Date of publication of application: **28.02.2001**
(21) Application number: 00307345.9
(22) Date of filing: 25.08.2000
(51) Int. Cl.: B60H 1/00

(54) **Car room temperature rise protector**

(30) Priority: 27.08.1999 JP 28331999
(71) Applicant: Nakamura, Koji, Hachioji-shi, Tokyo (JP)
(72) Inventor: Nakamura, Koji, Hachioji-shi, Tokyo (JP)
(74) Representative: Abbie, Andrew Kenneth

(57) **Abstract**

An electric generator (1) generates electric power dependent on received sunlight. A converter (2) converts the electric power generated by the electric generator (1) into a voltage. A temperature detector (3) detects temperature in a room of a car. A blower (4) which is driven by the voltage from the converter (2) is switched on to expel room air of the car to the outside thereof when the temperature detector (3) detects the temperature equal to or higher than a set value.

## Description

### BACKGROUND OF THE INVENTION

### 1. Field of the Invention

The present invention relates to a car room temperature rise protector. More particularly, the present invention relates to a room temperature rise protector, which can protect a rise in a room temperature for an unmanned car stopping outdoors, in summer and the like when sunlight is strong.

### 2. Description of the Related Art

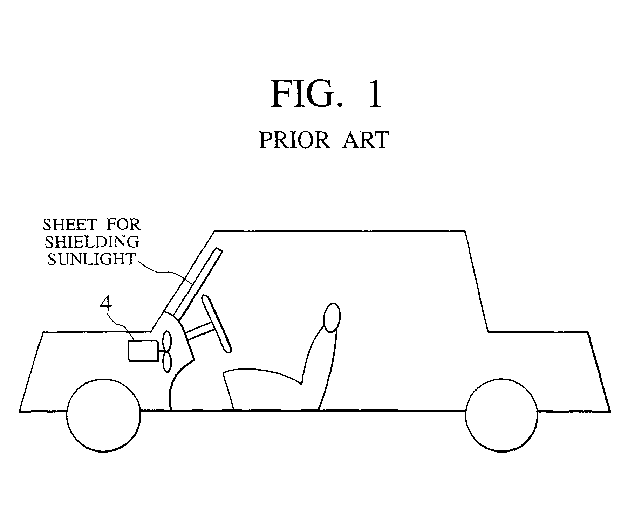

Typically, as a conventional room temperature rise protector for an unmanned car stopping outdoors, a method has been employed for mounting a sheet for shielding sunlight inside a front glass of a driver seat as shown in Fig.1 to thereby reflect the sunlight or absorbing it and accordingly protect a rise in a room temperature to some degree.

However, a window is typically closed in the conventional unmanned car stopping outdoors for a long time. So, in the daytime in summer when the sunlight is strong and the like, the room temperature is raised up to about 60 to 70 °C even if the sheet for shielding the sunlight is mounted. Thus, if an article weak in heat, for example, such as a toy made of celluloid or plastic, a cassette tape or the like, is placed in the room of the car, this method has a problem of influence caused by the heat.

Also, there is an accident example in which while a child is sleeping in a room of a car, the child dies of dehydration caused by the rise in the room temperature.

Moreover, there may be a case in which a window is slightly opened in order to protect the rise in the room temperature. If shower occurs in this case, rain blows into the room of the car so that the room of the car gets wet in the rain. Also, this has a problem that dust gets into the room of the car on a day when wind is strong.

On the other hand, upon starting a drive of a car, this method has problems of inconvenience of removing the conventional sheet for shielding the sunlight or inconvenience of opening a window for a few minutes while driving a blower or an air conditioning to thereby drop a room temperature.

### SUMMARY OF THE INVENTION

The present invention is proposed in view of the above mentioned circumstances. It is therefore an object of the present invention to provide a car room temperature rise protector, which can always link a rise in a room temperature of a conventional car stopping outdoors to a strength of sunlight even in an unmanned case to thereby make the room temperature similar to an external air temperature.

In order to achieve the above object, according to an aspect of the present invention, there is provided a car room temperature rise protector comprising: an electric generator for generating electric power dependent on received sunlight; a converter for converting the electric power generated by the electric generator into a voltage; a temperature detector for detecting temperature in a room of a car; and a blower driven by the voltage from the converter, for expelling room air of the car to the outside thereof when the temperature detector detects the temperature equal to or higher than a set value.

In a preferred embodiment of the present invention, an existing fan is used as the blower, and when an engine of the car is stopped, the existing fan is rotated in a normal direction to suck air outside the car or is rotated in the reverse direction to expel the room air.

The nature, principle and utility of the invention will become more apparent from the following detailed description when read in conjunction with the accompanying drawings.

### BRIEF DESCRIPTION OF THE DRAWINGS

In the accompanying drawings:
Fig.1 is a view showing an example of a configuration of a conventional car room temperature rise protector;
Fig.2 is a view showing a basic configuration of a first embodiment to which a protector of the present invention is applied;
Fig.3 is a view showing a basic configuration of a second embodiment to which the protector of the present invention is applied;
Fig.4 is a view illustrating an image of the first embodiment of the protector in the present invention;
Fig. 5 is a view illustrating an image of the second embodiment of the protector in the present invention;
Fig.6 is a flowchart describing operations of the first embodiment of the protector in the present invention; and
Fig.7 is a flowchart describing operations of the second embodiment of the protector in the present invention.

### DESCRIPTION OF THE PREFERRED EMBODIMENTS

An embodiment of the present invention will be described below with reference to the accompanying drawings.

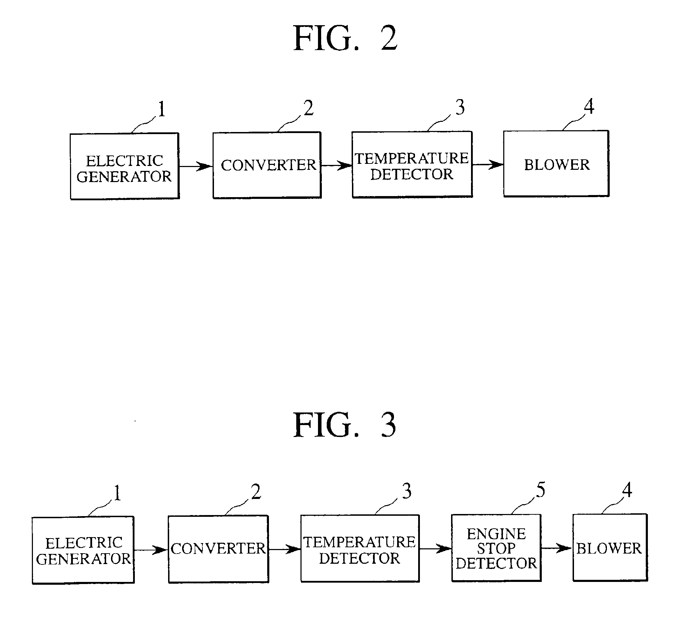

Figs.2 and 3 are views showing the basic configuration of a car room temperature rise protector, according to the present invention.

The car room temperature rise protector protects a rise in a room temperature by expelling the room air having high temperature to external portion of the car by using a blower with a solar battery as a power supply, for an unmanned car stopping outdoors.

At first, in Fig.2, an electric generator 1 is a solar battery or the like. It uses sunlight to then generate an electric power. It is connected to a converter 2. The converter 2 converts the electric power generated by the electric generator 1 into a voltage by which a blower 4 can be driven. It is a DC/DC converter or the like. It is connected to a temperature detector 3. The temperature detector 3 is a switch of a sensor type which is operated at a set temperature, or the like. If the room temperature exceeds the set temperature, the temperature detector 3 is closed so that a current flows through it. It is connected to the blower 4. The blower 4 is a fan or the like. It expels the room air having high temperature to the external portion of the car.

On the other hand, in Fig.3, an existing fan already mounted in a car or the like is used as the fan of the blower 4 in Fig.2. Moreover, a detection condition as to whether or not an engine of the car is stopped is added.

That is, an engine stop detector 5 is added for determining that the engine of the car is stopped, if a key of the car is located at a position of "LOOK" or the like, after the electric power of the electric generator 1 is converted into a voltage by the converter 2 and then the room temperature is detected by the temperature detector 3. Thus, only if the engine is stopped, the existing fan or the like is switched to a power supply of the electric generator 1 to thereby drive the existing fan or the like.

If the engine is not stopped in Fig.3, there may be a case that the existing fan is driven for an air conditioning or the like. The room temperature is not raised in this case. Thus, if the existing fan is used, a condition of an engine stop is added in order to check the unmanned stop.

By the way, the case in which the existing fan in Fig.3 is used may employ either a way in which the fan is rotated in a normal direction to suck air outside the car into the car or a way in which the fan is rotated in the reverse direction to expel the room air to the outside of the car.

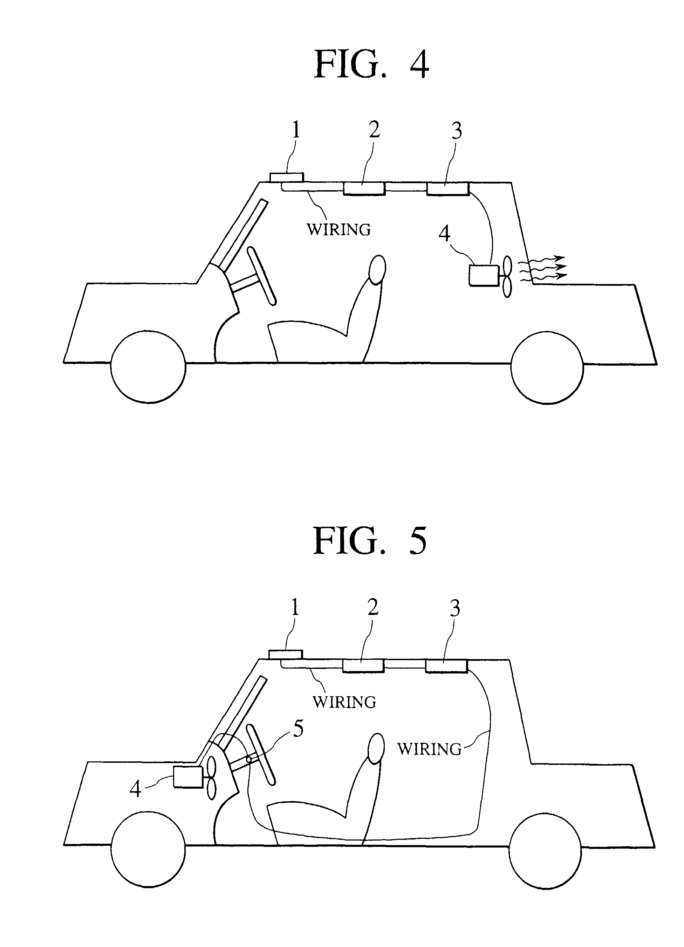

Fig.4 illustrates a car room temperature rise protector in a first embodiment according to the present invention. The electric generator 1 is mounted on a portion of a roof corresponding to a driver seat. Moreover, the converter 2 and the temperature detector 3 are mounted on a ceiling of the room in the car. Also, the blower 4 is mounted at the rear end of the room in the car. Under this configuration, wiring is installed between the respective units, and they are energized to thereby drive the blower 4. Accordingly, the room air having high temperature is expelled to the outside of the car so that the room temperature approximates the external air temperature. Thus, the rise in the room temperature is protected. By the way, it is desirable to drive the blower 4 when the set temperature of the temperature detector is about 30 °C.

On the other hand, Fig.5 illustrates an example of an image in a car room temperature rise protector in the second embodiment according to the present invention. The difference from Fig.4 lies in a configuration that an existing fan already mounted in a car is used as the blower 4 and further a condition that a key position of the car must be located at "LOOK" and the like is added as a condition of the engine stop. In this case, the used existing fan may be rotated in a normal direction to suck air outside the car into the car or rotated in the reverse direction to expel the room air to the outside of the car.

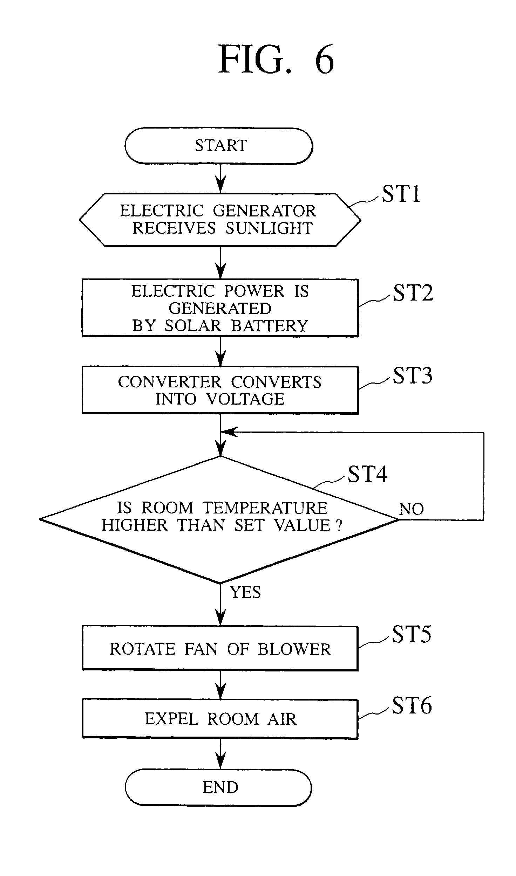

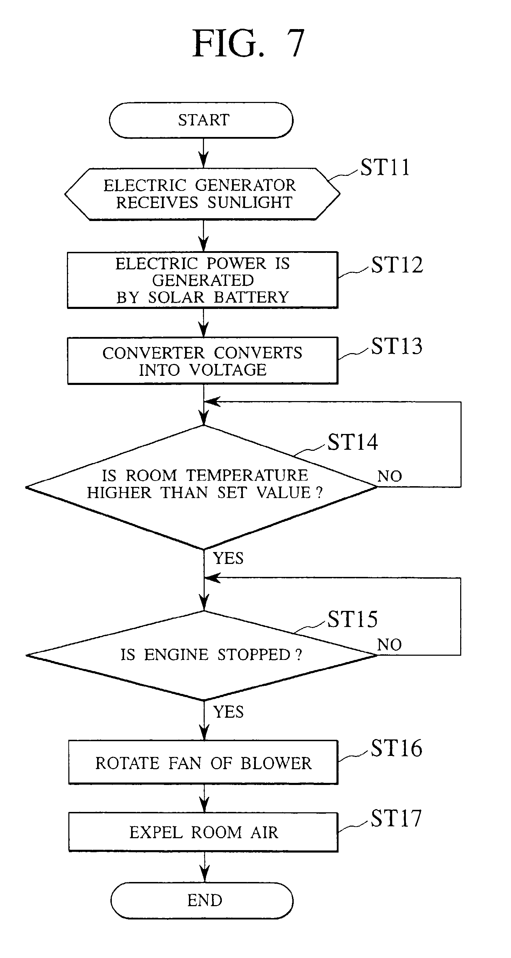

The operations of the car room temperature rise protector having the above-mentioned configuration will be described below with reference to Figs.6 and 7.

At first, Fig.6 is a flowchart describing the operations in Figs.2 and 4 according to the first embodiment.

In Fig.6, at first, the electric generator 1 receives sunlight (ST1). Next, a solar battery in the electric generator 1 generates electric power dependent on the received sunlight (ST2). The converter 2 converts the generated electric power into a voltage by which the fan of the blower 4 and so on can be driven (ST3). The temperature detector 3 checks whether or not a room temperature becomes equal to or higher than a set value (ST4). If the room temperature is less than the set value, the operational flow does not proceed to a next step. If the room temperature becomes equal to or higher than the set value, the fan of the blower 4 is driven (ST5). Accordingly, the room air having high temperature is expelled to the outside of the car (ST6). Then, the operations are ended.

Instead of the air expelled to the outside of the car, external air comes from gap of the car into the room. Thus, the room temperature approximates that of the external air. Also, if the room temperature is equal to or higher than the set value, the fan is always driven. However, the usage of the solar battery enables electric power not to be exhausted. Moreover, when the sun does not shine, the performance of the generation of the solar battery is dropped. However, the rise in the room temperature caused by such slight sunlight is small, which has no special influence.

Fig.7 is a flowchart describing the operations of Figs.3 and 5 according to the second embodiment in the present invention.

In Fig.7, at first, the electric generator 1 receives sunlight (ST11). Next, a solar battery in the electric generator generates electric power dependent on the received sunlight (ST12). The converter 2 converts the generated electric power into a voltage by which the fan of the blower 4 can be driven (ST13). The temperature detector 3 checks whether or not a room temperature becomes equal to or higher than a set value (ST14). If the room temperature is less than the set value, the operational flow does not proceed to a next step. If the room temperature becomes equal to or higher than the set value, it is checked whether or not an engine is stopped, in accordance with a position of the key switch of the car (ST15). If the engine is not stopped, the operational flow does not proceed to a next step. If the engine is stopped, an existing fan is driven as the fan of the blower 4 (ST16). Next, in accordance with a rotation direction of the existing fan, air is sucked from the outside of the car, or the air in the room of the car is expelled (ST17). Then, the operations are ended.

So, according to the configurations of the above-mentioned embodiments, the room air of the car, having high temperature, is expelled by using the fan with the solar battery as the power supply. Thus, the room temperature can approximate the external temperature. Hence, influence such as deformation caused by the heat is small even if the article weak in heat is placed in the room of the car.

Since the solar battery is used as the power supply, electric power is not exhausted. Even if the car stops outdoors in the unmanned state for a long time, the room air having high temperature is automatically expelled to thereby enable the rise in the room temperature to be protected. Thus, this has a merit that when a person gets on the car, he/she does not feel heat as compared with the conventional technique.

Moreover, it is not necessary to slightly open the window of the car. Thus, this has a merit that it is possible to protect a shower, a dust and an insect from coming therein.

By the way, the car room temperature rise protector according to the present invention is provided with the electric generator, the converter, the temperature detector, the blower and the engine stop detector. However, it is not limited to those configuration members.

As mentioned above, the present invention provides the following effects.

According to the present invention, the room air having high temperature can be automatically expelled to the outside of the car without the necessity that the window thereof is slightly opened. Thus, this is safe against a theft and the like. Hence, this has the effect that it can effectively provide the car room temperature rise protector, especially for the car stopping outdoors for a long time under the blazing sun.

Also, since the solar battery is used, the power supply is never exhausted. The room air of the car, having high temperature, is automatically expelled even in the case of the car stopping alone for a long time. Thus, this has the effect that it is possible to protect the adverse influence on the article weak in heat inside the room of the car.

It should be understood that many modifications and adaptations of the invention will become apparent to those skilled in the art and it is intended to encompass such obvious modifications and changes in the scope of the claims appended hereto.

## Claims

1. A car room temperature rise protector comprising:
an electric generator (1) for generating electric power dependent on received sunlight;
a converter (2) for converting the electric power generated by the electric generator (1) into a voltage;
a temperature detector (3) for detecting temperature in a room of a car; and
a blower (4) driven by the voltage from the converter (2), for expelling room air of the car to the outside thereof when the temperature detector (3) detects the temperature equal to or higher than a set value.

2. A car room temperature rise protector of claim 1, wherein an existing fan is used as the blower (4), and when an engine of the car is stopped, the existing fan is rotated in a normal direction to suck air outside the car or is rotated in the reverse direction to expel the room air.

3. Apparatus for reducing the temperature in a vehicle interior, said apparatus comprising displacement means (4) for displacing air in the vehicle interior to reduce the temperature therein when the temperature rises above a predetermined value and means (1, 2) for using solar radiation to drive said displacement means.

4. A car comprising a car room temperature rise protector as claimed in claim 1 or 2; or apparatus as claimed in claim 3.
